# EUROPEAN PATENT APPLICATION

(11) **EP 4 345 413 A1**
(43) Date of publication of application: **03.04.2024**
(21) Application number: 23200421.8
(22) Date of filing: 28.09.2023
(51) Int. Cl.: G01B 11/26, G01B 11/27

(54) **LIGHT SENSITIVE TARGET AND ALIGNMENT SYSTEM**

(30) Priority: 29.09.2022 US 202263411316 P
(71) Applicant: HAMAR LASER INSTRUMENTS, Inc., Danbury, CT 06810 (US)
(72) Inventor: ARAUJO, Carlos, Danbury, 06810 (US); HAMAR, Roderick R., Sandy Hook, 06482 (US)
(74) Representative: Müller-Boré & Partner Patentanwälte PartG mbB

(57) **Abstract**

A target assembly for a laser alignment system has a housing with a planar rear face, a front face and an interior between the front and rear faces. An aperture extends through the front face and into the interior. A reflective surface is in the housing interior forward of the planar rear face. The reflective surface is aligned so that a laser beam directed through the aperture and into the housing interior impinges on the reflective surface and is reflected 90°. A sensor cell in the target housing has a light sensitve surface aligned perpendicular to the planar rear face of the target housing. A distance from a point of impingement of the laser beam on the reflective surface to the light sensitive surface equals a distance from the point of impingement of the laser beam on the reflective surface to the planar rear face of the target housing.

## Description

### BACKGROUND

1. Field of the Invention. The invention relates to a light sensitive target and to an alignment system that includes the light sensitive target and at least one light emitting device, such as a laser emitter to produce a laser beam that impinges upon the target.

2. Related Art. Laser alignment systems have been commercially available for decades and typically include at least one laser emitter that can emit a laser beam, at least one target that can identify the center of energy of the laser beam impinging upon the target and a data processor for receiving the data obtained by the target and presenting that data to an operator in a meaningful and usable form. This combination of a laser emitter, a target and a processor can be used to identify x, y coordinates of the target relative to the laser emitter.

The known laser emitter and/or the known target can be used with a collimating lens to produce a collimated laser beam. The collimated laser beam can be used to identify the angular alignment of the laser beam relative to the target.

US Patent No. 4,483,618 describes a target that employs a virtual target location. In particular, a pentaprism is mounted in the path of the incoming laser beam. The reflective surface of the pentaprism is disposed at a specified distance in front of a desired measurement point. The photoelectric cell of the target is disposed at that same distance from the reflective surface of the pentaprism but at a position to be impinged upon by the reflected laser beam. The actual photoelectric cell provides the same readings as readings that would be produced by a virtual target at the desired measurement point. Targets that incorporate this concept enable measurements to be taken at a desired measurement point even though the actual photoelectric cell cannot physically be placed at that point.

Some laser alignment systems have a rotating pentaprism associated with the laser emitter. The pentaprism reflects the incoming laser beam 90°, and the rotation of the pentaprism causes the reflected laser beam to sweep a flat optical plane. One or more targets can be positioned to be impinged upon the laser beam that is being swept through the flat optical plane to identify positions of the one or more targets relative to the plane.

The above-described laser alignment components and systems generally work very well and can provide high precision readings relating to the position of the target relative to the incoming laser beam with respect to x, y coordinates, to identify the angular alignment of the target relative to the incoming laser beam and to identify the position of the target relative to a flat optical plane. However, an ability to perform all of these measurements generally has required at least two different types of targets. Furthermore, obtaining accurate measurements is more difficult if the target is not aligned properly with respect to the incoming laser beam. For example, the target illustrated schematically in the above-referenced US Patent No. 4,483,618 would require the target to be fixtured fairly close to the desired position and alignment, and this known target would require calculations to be carried out to compensate for any misalignment or incorrect positioning of the target relative to the incoming laser beam. Additionally, the collimating lens that is required to make angular alignment measurements has required a complicated mounting arrangement with a possibility of inaccurate positioning and repeatability problems. Furthermore, the target described in US Patent No. 4,483,618 is not well suited for use with a with a laser emitter that sweeps a flat optical plane to determine the position of that target relative to the flat optical plane.

An object of this invention is to provide an enhanced target that can be used for measuring displacement of the target relative to the incoming laser beam, for determining the alignment of the target to the incoming laser beam and for determining the position of the target relative to a flat optical plane.

This object is solved according to the invention by the features of the independent claim. Particular embodiments of the invention are subject of the dependent claims.

### SUMMARY

This disclosure relates to a target assembly with a housing having opposite front and rear faces. A face plate is mounted to the rear face of the target housing and has a rear surface that defines a measurement plane at which measurements can be made. A mounting stud is mounted to project rearward from the rear surface of the face plate and can be mounted in an apparatus, such as a chuck or spindle.

The front face of the target housing includes an aperture through which a laser beam can be directed.

The target assembly further has a lens assembly. The lens assembly includes a lens housing with a mounting face that can be mounted removably against the front face of the target housing. For example, magnets are provided in some embodiments to enable removable mounting of the lens assembly to the front face of the target housing. A collimating lens is mounted in the lens housing of some embodiments.

A right angle prism is mounted in the target housing at a position to align with the optical axis of the collimating lens when the lens assembly is mounted properly on the target housing. The right angle prism has a reflecting surface aligned at a 45° angle to the optical axis of the collimating lens. Additionally, a sensor cell is mounted in the target housing so that the plane of the sensing surface of the sensor cell is parallel to the optical axis of the lens and perpendicular to the rear surface of the face plate of the target housing. A distance from the point where the optical axis intersects the reflecting surface of the right angle prism to the sensor cell is equal to a distance from the point where the optical axis intersects the reflecting surface of the right angle prism to the rear surface of the face plate. The rear surface of the face plate defines the measurement plane at which measurements will be made. Thus, readings obtained by the sensor cell are exactly the same as readings that would be made if the surface of the sensor cell was coplanar with the measurement plane defined by the rear surface of the face plate.

The target housing of some embodiments includes a rechargeable battery that can provide sufficient power to operate the sensor cell. The target housing of some embodiments further may include a Bluetooth apparatus that enables readings obtained by the sensor cell to be communicated wirelessly with a data processing unit that is external of the target housing. The Bluetooth apparatus may be powered by the rechargeable battery.

The target assembly that has the collimating lens assembly mounted to the front surface of the target housing can be used with a laser emitter to identify angular alignment of an incoming laser beam from the laser emitter to the measurement plane at the rear of the face plate. The target assembly can also can be used with the laser emitter to identify horizontal and vertical displacements of the laser beam by removing the collimating lens assembly from the front surface of the target housing. These reading also are the same as those that would be obtained if the sensor cell was located at the rear surface of the face plate.

The target assembly also can be used for flatness measurements relative to a plane. In this regard, a measuring base can be mounted on a frame of reference in proximity to the optical plane that will be swept e.g. by a rotating pentaprism. The base may include a mounting plate with an aperture that is dimensioned to receive the mounting stud of the target assembly. The above-described lens assembly can be removed from the target housing. The laser beam that sweeps a flat optical plane will sweep across the right angle prism in the target housing and will be reflected to the sensor cell to define the position of the desired measurement point relative to the the optical plane produced by the laser.

These and other aspects of this disclosure will become more apparent from accompanying drawings and the description of those drawings.

### BRIEF DESCRIPTION OFTHE DRAWINGS

FIG. 1 is a front perspective view of a target assembly in accordance with an embodiment of this disclosure and shows a target housing and a lens assembly mounted on a front part of the target housing.
FIG. 2 is a top view of the target assembly of FIG. 1.
FIG. 3 is a front view of the target assembly.
FIG. 4 is a rear view of the target assembly
FIG. 5 is a cross-sectional view taken along line 5-5 of FIG. 3.
FIG. 6 is schematic cross-sectional view of the target housing similar to FIG. 5 and showing the right angle prism and the sensor relative to the rear face of the target housing
FIG. 7 is a front view of the target housing with the lens assembly removed.
FIG. 8 is a rear view of the lens assembly.
FIG. 9 is a perspective view of the target assembly and the corresponding lens assembly in a disassembled state.
FIG. 10 is a perspective view of a base for adjustably mounting the target assembly on a work surface.
FIG. 11 is a perspective view showing the target assembly mounted to the base.
FIG. 12 is a rear view showing the target assembly mounted to the base.

### DETAILED DESCRIPTION

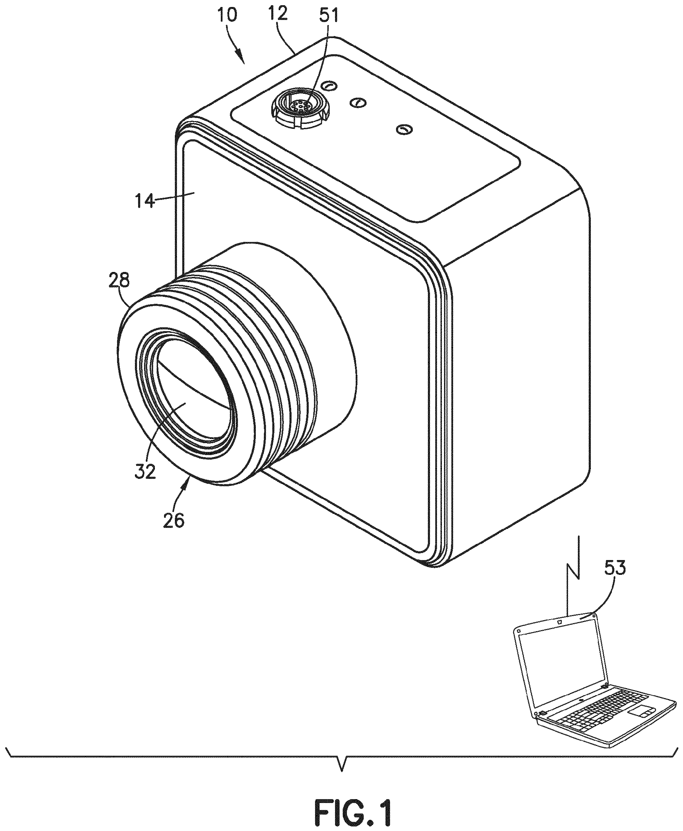

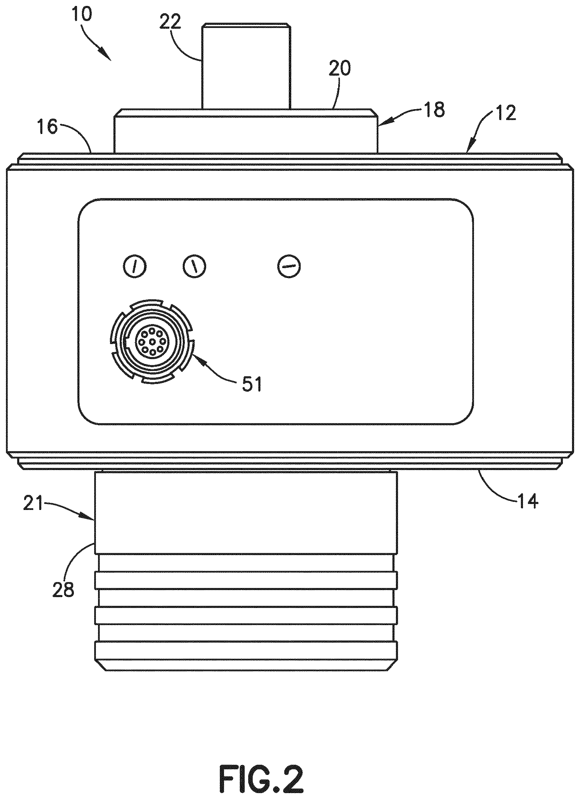

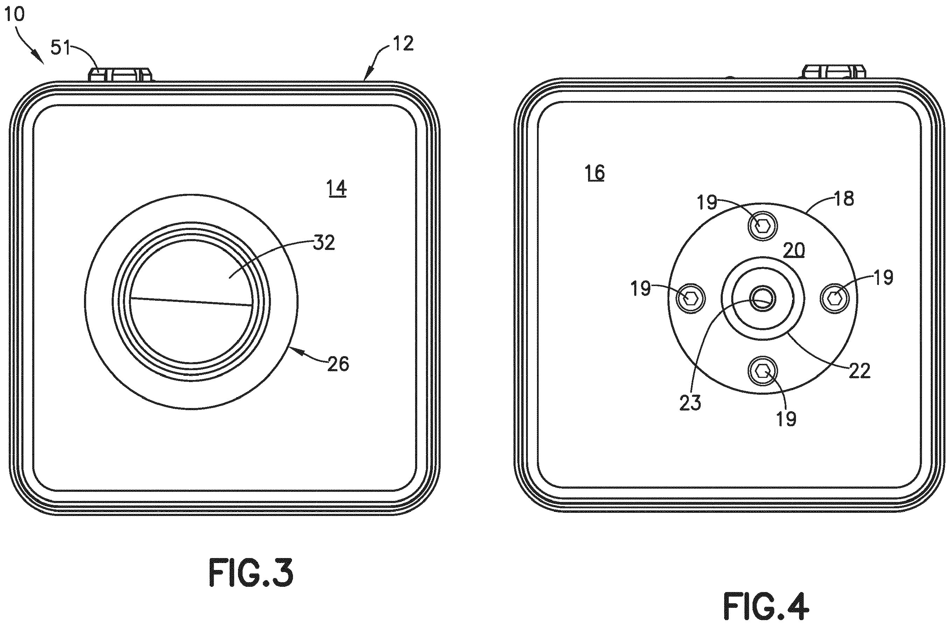

A target assembly in accordance with an embodiment of the invention is identified by the numeral 10 in FIGS. 1-7. The target assembly 10 includes a target housing 12 with opposite front and rear faces 14 and 16. A face plate 18 is mounted to the rear face 16 of the target housing 12 by four threaded bolts 19, as shown in FIG. 4, and has a rear surface 20 that defines a measurement plane at which measurements will be made, as described herein. A mounting stud 22 projects perpendicularly from a center part of the rear surface 20 of the face plate 18. No other part of the target assembly 10 prevents the rear surface 20 of the face plate18 from being against a surface that is to be assessed for alignment, such as the front surface of a chuck or spindle. The mounting stud 22 is mountable in an industrial or machine apparatus, such as a chuck or spindle. A threaded aperture 23 extends axially into the rear end mounting stud 22 and can receive a mounting bolt for mounting the target assembly 10 to a base, as explained herein.

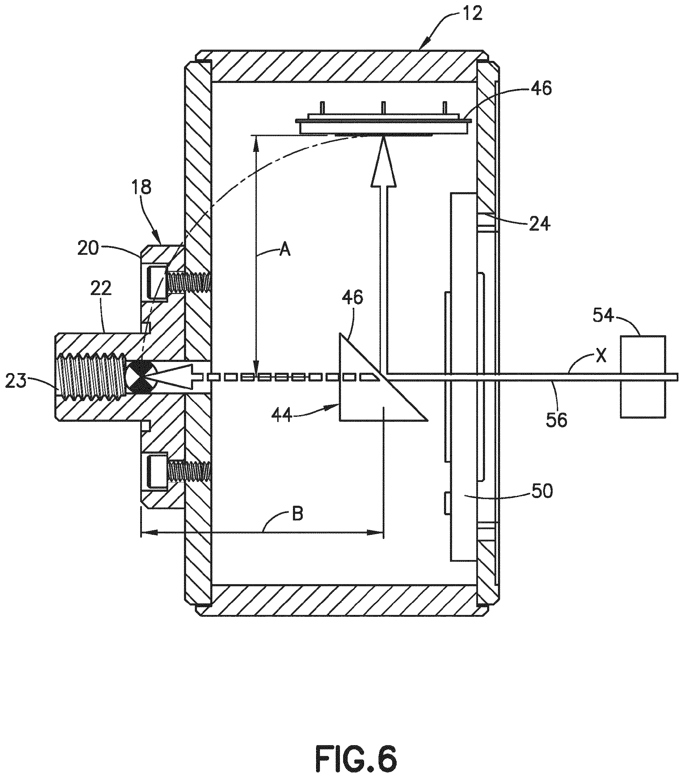

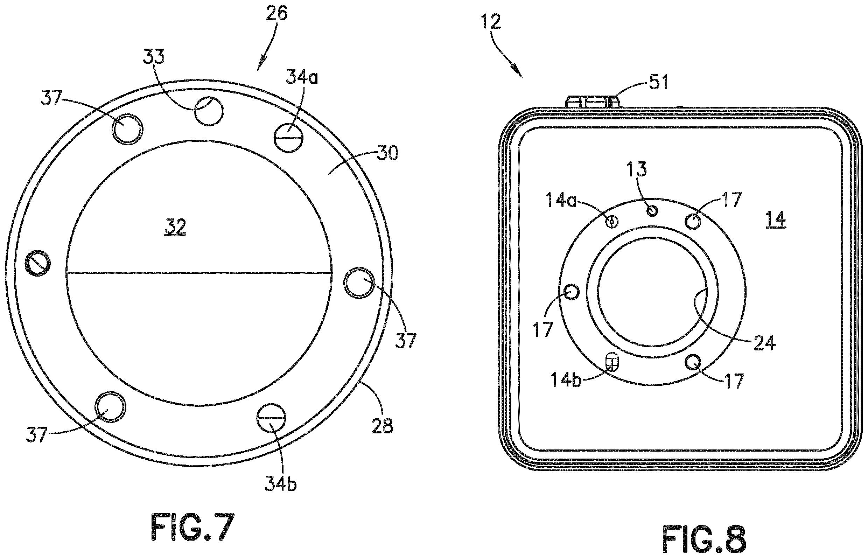

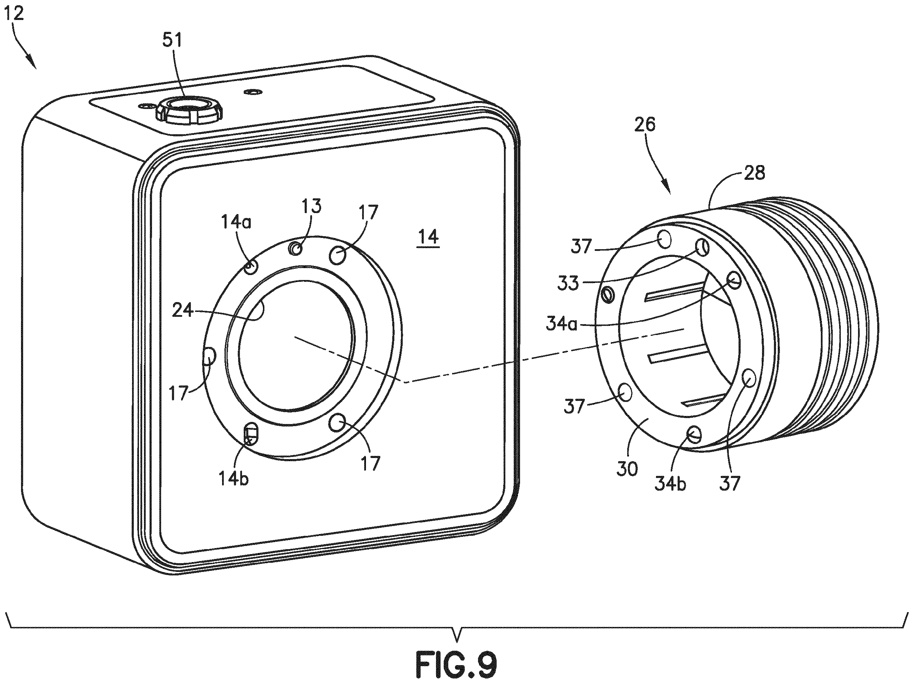

The front face 14 of the target housing 12 includes an aperture 24, as shown in FIGS. 6, 8 and 9, through which a laser beam can be directed, as explained herein. A lens assembly 26 is mounted removably to the front face 14 of the target housing 12. More particularly, the lens assembly 26 includes a generally cylindrical lens housing 28 with a mounting face 30, as shown in FIGS. 7 and 9, that can be mounted against the front face 14 of the target housing 12. The lens assembly 26 also includes a collimating lens 32 mounted in the lens housing 28 so that an optical axis X of the collimating lens 32 aligns with a center of the aperture 24 in the front face 14 of the target housing 12, as shown in FIG. 6.

The mounting face 30 of the lens housing 28 has an alignment hole 33 and two alignment balls 34a and 34b. The mounting face 30 of the lens housing 28 also has three permanent magnets 37 spaced circumferentially around the mounting face 30 at an angular spacing of 120°. The front face 14 of the target housing 12 includes an alignment pin 13 disposed to engage in the alignment hole 33 of the lens housing 28, two alignment recesses 14a and 14b disposed and dimensioned to receive the two alignment balls 34a and 34b on the lens housing 28 and three permanent magnets 17 disposed to align with the permanent magnets 37 on the lens housing 28 when the lens housing 28 is aligned properly on the target housing 12. A projecting distance of the alignment pin 13 of this embodiment exceeds a projecting distance of the alignment balls 34a and 34b on the lens housing 28. Thus, the alignment pin 13 of the target housing 12 can be inserted into the alignment hole 33 of the lens housing 28, and the lens housing 28 then can be rotated about the alignment pin 13 until the alignment balls 34a, 34b of the lens housing 28 align respectively with the alignment recesses 14a, 14b of the target housing 12. The magnets 37 also will align with one another at this rotational position of the lens housing 28 with the target housing 12 and will urge the lens housing 28 toward the target housing 12. Thus, the two alignment balls 34a, 34b on the lens housing 28 will engage respectively with the two alignment recesses 14a and 14b on the front face 14 of the target housing 12 and will be held in position by the opposed magnets 17, 37 to ensure that the lens assembly 26 is retained removably and is aligned properly on the target housing 12 vertically, horizontally and rotationally.

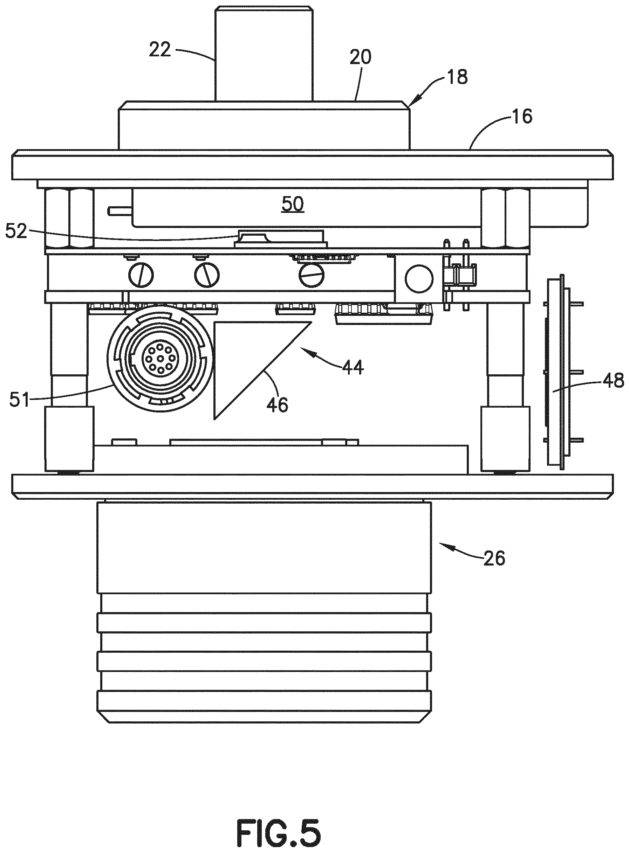

A right angle prism 44 is mounted in the target housing 12 at a position to align with the optical axis X of the collimating lens 32 when the lens assembly 26 is mounted properly on the target housing 12, as shown in FIGS. 5 and 6. The right angle prism 44 has a reflecting surface 46 aligned at a 45° angle to the optical axis X of the collimating lens 32 and at a 45° angle to the measurement plane defined by the rear surface 20 of the face plate 18 on the rear surface 16 of the target housing 12. Additionally, a sensor cell 48 is mounted in the target housing 12 so that the plane of the sensor cell 48 is perpendicular to the rear surface 20 of the face plate 18 of the target housing 12 and parallel to the optical axis X of the collimating lens 32. A distance A from the intersection of the optical axis X with the reflecting surface 46 of the right angle prism 44 to the sensor cell 48 substantially is equal to a distance B from the intersection of the optical axis X with the reflecting surface 46 of the right angle prism 44 to the rear surface 20 of the face plate 18. As noted above, the rear surface 20 of the face plate 18 defines the measurement plane at which measurements are desired. Readings obtained by the sensor cell 46 are exactly the same as readings that would be made if the surface of the sensor cell 46 was coplanar with the measurement plane as defined by the rear surface 20 of the face plate 18 or the front surface of an apparatus, such as a chuck or spindle against which the face plate 18 is held. The planar shape of the rear surface 20 of the face plate 18 ensures that the rear surface 20 of the face plate 18 can be placed flat against the front surface of a device that is to be assessed for alignment and position. Thus, readings obtained by the sensor cell 46 will be identical to readings corresponding to the surface against which the rear surface 20 of the face plate 18 is positioned. The target assembly 10 can be used, for example to assess the alignment of a rotating tool or spindle merely by engaging the mounting stud 22 in the chuck or collet with the rear surface 20 of the face plate 18 flush against the front face of the rotating tool. No separate fixture is required for this alignment assessment.

The target housing 12 further includes a rechargeable battery 50 that provides sufficient power to operate the sensor cell 48. A charger input port 51 is connected to the rechargeable battery 50 and is accessible from the exterior of the target housing 12 to receive, for example, a USB port for charging the battery 50. The input port 51 also can be used for cabled data transfer. The target housing 12 further includes a Bluetooth radio 52 that communicates with the sensor cell 48 and enables readings obtained by the sensor cell 48 to be communicated wirelessly with the data processing unit or control unit 53 external of the target housing 12, as shown schematically in FIG. 1.

In the context of this disclosure, a "control unit" can be understood to include, for example, a processor and/or a storage unit or memory for storing algorithms and program commands. By way of example, the processor and/or the control unit is specifically configured to carry out program commands in such a way that the processor and/or the control unit carries out functions to implement or realize a method as disclosed herein or a step of a method as disclosed herein. The term control unit is used here synonymously with devices known from the prior art. A control unit, therefore, encompasses a "computer" and accordingly comprises one or more general-purpose processors (CPUs) or microprocessors, RISC processors, GPUs and/or DSPs. The control unit or computer has for example additional elements such as storage interfaces or communication interfaces such as a keyboard and/or a touch screen monitor. Optionally or additionally, the terms "control unit" and "computer" refer to a device that is capable of executing a provided or included program, preferably with standardized programming language (for example C++, JavaScript or Python), and/or of controlling and/or accessing data storage devices and/or other devices such as input interfaces and output interfaces. The term computer also refers to a multiplicity of processors or a multiplicity of (sub)computers that are interconnected and/or connected and/or otherwise communicatively connected and possibly share one or more other resources, such as for example a memory.

In the context of this disclosure, a "storage unit" can be understood to mean, for example, a volatile memory in the form of random access memory (RAM) or a permanent memory such as a hard disk drive or a data medium or, for example, a replaceable storage module or a cloud-based storage solution.

The target assembly 10 can be used with a laser emitter 54 to identify angular alignment of an incoming laser beam 56 from the laser emitter 54 to the measurement plane at the rear of the face plate 18. In this regard, the lens assembly 26 is mounted to the front surface 14 of the target housing 12 by relying upon the alignment balls 34a, 34b on the mounting face 30 of the lens housing 28, the alignment recesses 14a, 14b on the front face 14 of the target housing 12 and the opposed pairs of magnets 17, 37 to align and retain the lens assembly 26 in a proper position on the front face 14 of the target housing 12. The collimating lens 32 produces a collimated laser beam 56 that is reflected off the surface 46 of the right angle prism 44 and impinges upon the sensor cell 48. The center of energy of the reflected laser beam 56 impinging upon the sensor cell 46 is transmitted by the Bluetooth apparatus to the external control unit 53 to provide highly accurate information regarding the angular alignment of the measurement plane at the rear surface 20 of the face plate 18 relative to axis of the laser beam 56.

The target assembly 10 also can be used with the laser emitter 54 to identify horizontal and vertical displacement of the laser beam relative to the axis of the machine tool or other apparatus that is being aligned. For this purpose, the lens assembly 26 is removed from the front surface 14 of the target housing 12 merely by exerting sufficient force to overcome the attraction between the magnets 37 in the lens housing 28 and the corresponding magnets 17 on the front surface 14 of the target housing 12. The laser beam 54 again is reflected from the reflective surface 46 of the right angle prism 44 and impinges upon the sensor cell 46. These readings obtained without the collimating lens assembly 26 will identify horizontal and vertical positions of the laser beam 54 relative to the target assembly 10. These readings are the same as those that would be obtained if the sensor cell 46 was located at the rear surface 20 of the face plate 18.

As noted above, laser alignment systems can be used to determine the location of one or more points to a plane. Laser alignment systems used for this purpose could have a rotating pentaprism that receives an incoming laser beam and effectively sweeps a plane with the reflection generated by the rotating pentaprism. Examples of laser devices for sweeping one or more flat optical planes are shown and described in US patent No. 6, 038,050 and US Patent No. 6,292,303, the disclosures of which are incorporated herein by reference. Targets would be located at one or more positions and readings obtained by those targets would determine the relationship between the measurement points and the optical plane that is swept by the rotating pentaprism. Prior art targets that were used to measure horizontal and vertical displacements of two parts of a machine relative to a rotational axis of the machine and/or to measure the alignment of rotatable components relative to a rotational axis generally were not well suited for determining the positions of locations relative to a plane. Accordingly, two different types of targets generally would be purchased for these different types of measurements.

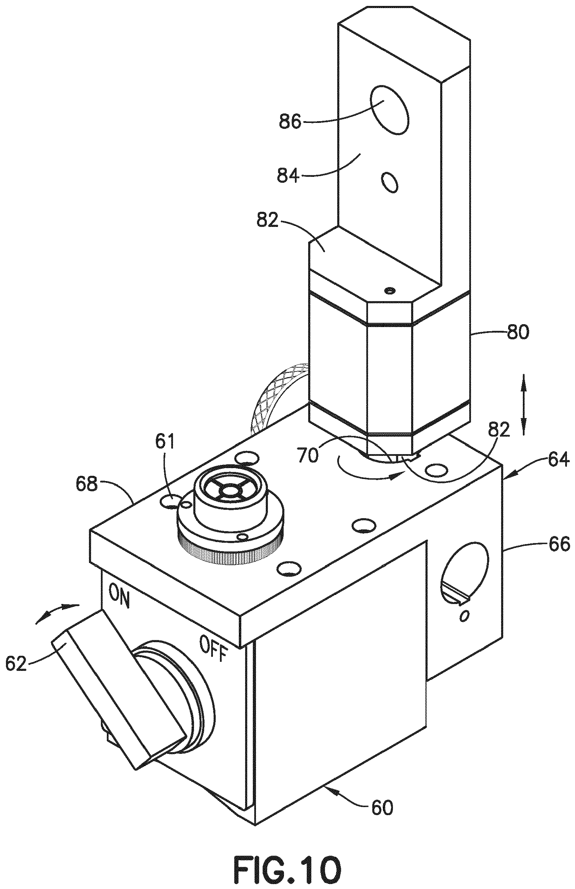

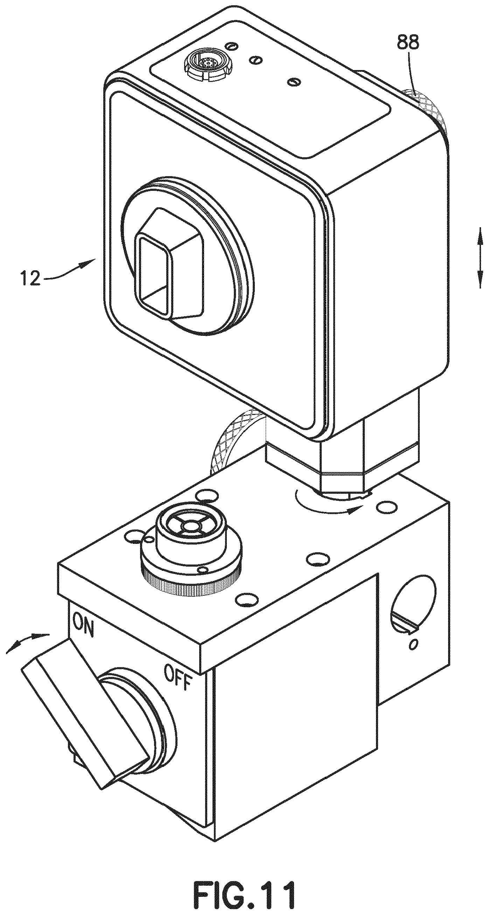

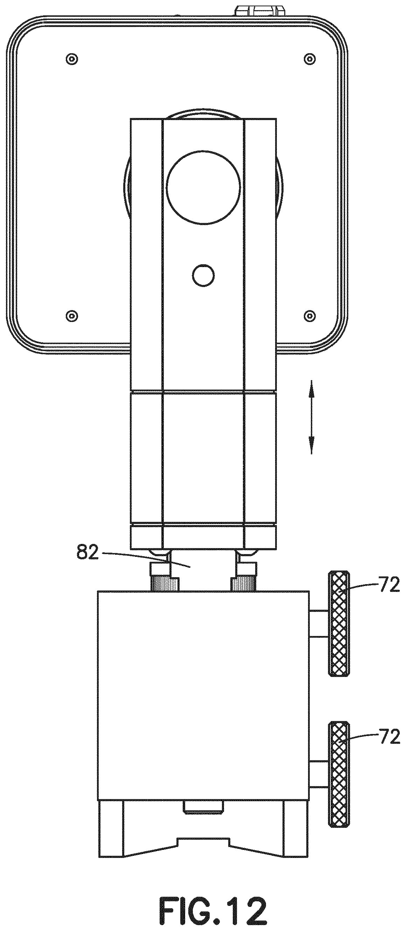

The target assembly 10 described and illustrated herein also can be used for flatness measurements relative to a plane. In this regard, a measuring base 60, as shown in FIGS. 10-12, can be mounted on a frame of reference in proximity to the optical plane that will be swept by a rotating pentaprism. The base 60 includes an electromagnet that can be actuated by a switch 62 to secure the base 60 to a metallic support, such as a surface of a work platform or an apparatus. A mounting bracket 64 is mounted securely to the base 60. More particularly, the mounting bracket 64 includes a body 66 configured to be mounted adjacent a rear surface of the base 60 and a plate 68 positioned on the top surface of the base 60. Apertures 69 extend through the plate 68 and are configured to receive threaded bolts for securely fixing the plate 68 of the mounting bracket 64 to the base 60 by passing the threaded bolts through the apertures 69 in the plate 68 of the mounting bracket 64 and into threaded apertures in the upper surface of the base 60. The body 66 of the mounting bracket 64 extends along a rear surface of the base 60 and at a position opposed to the switch 62. An aperture 70 extends vertically through the body 66 and threaded apertures extend horizontally into the body 66 of the mounting bracket 64 and communicate with the aperture 70. Bolts 72 extend horizontally into the threaded apertures in the body 66 of the mounting bracket 64 and communicate with the vertical aperture 70.

A target mount 80 is mounted for vertical and rotational adjustments relative to the body 66 of the mounting bracket 64. More particularly, a lower surface of the target mount 80 has a post 82 that is mounted in the aperture 70 extending vertically through the body 66 of the mounting bracket 64 so that the target mount 80 can be rotated about the vertical axis of the post 82 relative to the body 66 of the mounting bracket 64. Additionally, the post 82 enables the target mount 80 to be moved vertically relative to the body 66 of the mounting bracket 64. The bolts 72 can be tightened for holding the target mount 80 in a fixed rotational position and a fixed vertical position relative to the mounting bracket 64. The target mount 80 includes a horizontal supporting surface 82 for supporting a lower surface of the target assembly 10 and a vertical support 84 for supporting the rear surface 20 of the faceplate 18 of the target assembly 10. More particularly, the vertical support 84 has an aperture 86 extending therethrough for receiving the mounting stud 22 of the target assembly 10. A bolt 88 can be threaded into the aperture 23 in the mounting stud 22 of the target assembly 10 for securing the target assembly 10 on the vertical support 84 of the target mount 80. The position of the aperture 24 in the front surface 14 of the target assembly 10 can be adjusted vertically and rotationally by making corresponding vertical and rotational movements of the target mount 80 relative to the mounting bracket 64 to enable a laser beam from a remote location to pass through the aperture 24 in the front surface 14 of the target assembly 10 and to be reflected by the right angle prism 44 toward the sensing cell 46.

According to the present disclosure, there is provided a target assembly for a laser alignment system which has a housing with a planar rear face, a front face and an interior between the front and rear faces. An aperture extends through the front face and into the interior. A reflective surface is in the housing interior forward of the planar rear face. The reflective surface is aligned so that a laser beam directed through the aperture and into the housing interior impinges on the reflective surface and is reflected about 90°. A sensor cell in the target housing has a light sensitve surface aligned perpendicular to the planar rear face of the target housing. A distance from a point of impingement of the laser beam on the reflective surface to the light sensitive surface substantially equals a distance from the point of impingement of the laser beam on the reflective surface to the planar rear face of the target housing.

The invention has been described with respect to a preferred embodiment. However, changes can be made without departing from the scope of the invention.

## Claims

1. A target assembly for a laser alignment system, comprising:
a target housing having a planar rear face, a front face opposite the rear face and a target housing interior between the front and rear faces, an aperture extending through the front face and into the target housing interior;
a reflective surface in the target housing interior at a specified distance forward of the planar rear face, the reflective surface being aligned so that a laser beam directed through the aperture and into the target housing interior impinges on the reflective surface and is reflected 90°;
a sensor cell mounted in the interior of the target housing and having a light sensitive surface aligned perpendicular to the planar rear face of the target housing, wherein:
a distance from a point of impingement of the laser beam on the reflective surface to the light sensitive surface equals a distance from the point of impingement of the laser beam on the reflective surface to the planar rear face of the target housing.

2. The target assembly according to claim 1, further comprising a mounting stud projecting perpendicularly rearward from the planar rear face of the target housing.

3. The target assembly according to claim 1 or 2, further comprising a lens removably mounted to the front face of the target housing.

4. The target assembly according to claim 3, wherein the lens is a collimating lens.

5. The target assembly according to claim 3 or 4, wherein the lens is mounted in a lens housing, and at least one of the target assembly and the lens housing further comprises at least one magnet removably retaining the lens housing and the lens on the front face of the target housing.

6. The target assembly according to claim 5, further comprising interengaged projections and recesses on the front face of the target housing and a rear surface of the lens housing for aligning the lens housing in a specified position relative to the target housing.

7. The target assembly according to any of claims 1-6, further comprising a control unit that receives and analyzes signals indicative of locations of laser impingement on the light sensor and a communication device that transmits signals wirelessly from the light sensor to the control unit.

8. The target assembly according to any of claims 1-7, further comprising a rechargeable battery for providing electrical power to the light sensor.

9. The target assembly according to any of claims 1-8, wherein the reflective surface is on a right angle prism.

10. The target assembly of any of claims 1-9 further comprising a target mounting assembly for vertically adjusting a position of the target housing along a vertical axis and rotational adjusting the position of the target housing about the vertical axis.
